(19) Europäisches Patentamt
European Patent Office
Office européen des brevets

(11) EP 0 415 199 B1

(12) **EUROPÄISCHE PATENTSCHRIFT**

(45) Veröffentlichungstag und Bekanntmachung des Hinweises auf die Patenterteilung:
**05.03.1997 Patentblatt 1997/10**

(21) Anmeldenummer: **90115746.1**

(22) Anmeldetag: **17.08.1990**

(51) Int Cl.[6]: **C08L 69/00**, C08L 33/08, C08L 25/14, C08G 77/448, C08L 83/10 // (C08L69/00, 33:08), (C08L69/00, 25:14)

# (54) Polycarbonatformmassen, ihre Herstellung und Verwendung

Polycarbonate moulding compositions, their preparation and use

Masses à mouler de polycarbonates, leur préparation et leur utilisation

(84) Benannte Vertragsstaaten:
**DE FR GB IT NL**

(30) Priorität: **30.08.1989 DE 3928661**

(43) Veröffentlichungstag der Anmeldung:
**06.03.1991 Patentblatt 1991/10**

(73) Patentinhaber: **BAYER AG**
**51368 Leverkusen (DE)**

(72) Erfinder:
- **Jung, Alfred, Dr.**
  **D-4150 Krefeld 1 (DE)**
- **Piejko, Karl-Erwin, Dr.**
  **D-5060 Bergisch Gladbach 2 (DE)**
- **Nouvertné, Werner, Dr.**
  **D-4150 Krefeld (DE)**
- **Grigo, Ulrich, Dr.**
  **D-4152 Kempen 3 (DE)**
- **Lindner, Christian, Dr.**
  **D-5000 Köln 80 (DE)**

(56) Entgegenhaltungen:
**DE-A- 3 833 218**
**FR-A- 2 167 650**
**JP-A-55 135 157**
**US-A- 4 563 503**
**US-A- 4 735 993**
**US-A- 4 743 654**
**US-E- 28 723**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 415 199 B1

Printed by Jouve, 75001 PARIS (FR)

**Beschreibung**

Gegenstand der vorliegenden Erfindung sind Mischungen, bestehend aus

1) 85 Gew.-% bis 99,9 Gew.-%, vorzugsweise 88 Gew.-% bis 99,5 Gew.-% und insbesondere 90 Gew.-% bis 99 Gew.-% an thermoplastischen, aromatischen Polycarbonaten und

2) 15 Gew.-% bis 0,1 Gew.-%, vorzugsweise 12 Gew.-% bis 0,5 Gew.-% und insbesondere 10 Gew.-% bis 1 Gew.-% an unvernetzten, thermoplastischen Polymerisaten mit mittleren Gewichtsmittelmolekulargewichten $\overline{M}_w$ (ermittelt beispielsweise durch Streulichtmessung) von 2.000 bis 500.000 g/Mol, vorzugsweise von 5.000 bis 200.000 g/Mol, die dadurch gekennzeichnet sind, daß die Polymerisate (2) aus

2.1) (Meth)Acrylsäure-$C_{10}$-$C_{40}$-Alkylestern in bekannter Weise hergestellt sind, wobei

2.2) bis zu 90 Gew.-%, vorzugsweise von 0 Gew.-% bis 85 Gew.-% und insbesondere von 10 Gew.-% bis 80 Gew.-% der Komponente 2.1) durch Styrole ersetzt sein können, oder wobei

2.3) bis zu 60 Gew.-%, vorzugsweise von 10 Gew.-% bis zu 50 Gew.-% der Komponente 2.1) durch Methacrylsäure-$C_1$-$C_4$-Alkylester ersetzt sein können,
und wobei die Polymerisate 2) eine Glastemperatur von über + 2°C, vorzugsweise von über + 10°C haben müssen und amorph sind.

Bevorzugte Alkylester der (Meth)-Acrylsäure gemäß 2.1) sind solche von $C_{12}$- $C_{30}$-Alkoholen, insbesondere von $C_{14}$-$C_{28}$-Alkoholen und ganz besonders von $C_{16}$-$C_{26}$-Alkoholen.
Die erfindungsgemäßen Mischungen zeichnen sich durch hohe Kraftstoffbeständigkeit aus, gegebenenfalls kombiniert mit verbesserter Tieftemperaturzähigkeit.

Die Komponente 1)

Erfindungsgemäß geeignete thermoplastische, aromatische Polycarbonate sind solche auf Basis der Diphenole der Formel (I)

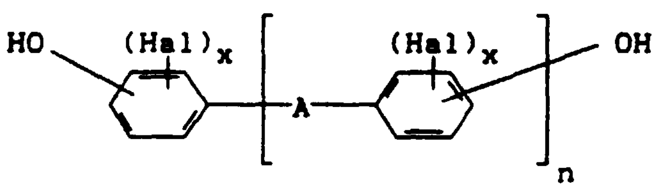

(I)) ,

worin

A eine Einfachbindung, ein $C_1$-$C_5$-Alkylen, ein $C_2$-$C_5$-Alkyliden, ein $C_5$-$C_6$-Cycloalkyliden, -S- oder -$SO_2$-,

Hal Chlor oder Brom,

x 0, 1 oder 2 und

n 1 oder null sind

und gegebenenfalls der Formel (Ia)

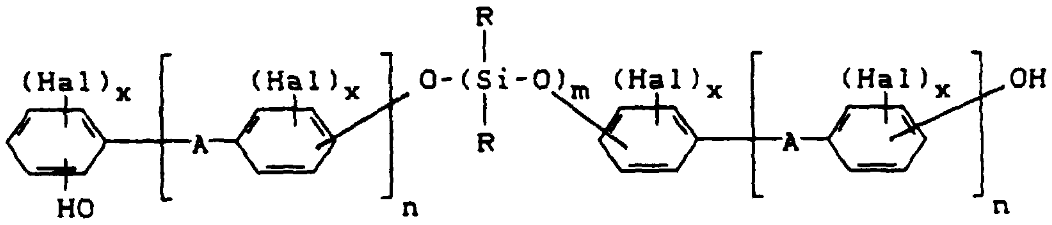

(Ia)

worin

| | |
|---|---|
| A, | Hal, |
| x und n | die für Formel (I) genannte Bedeutung haben, und die |
| R's | gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und |
| m | eine ganze Zahl zwischen 5 und 200, vorzugsweise zwischen 10 und 150 und insbesondere zwischen 20 und 80 ist. |

Die Reste R können einmal bis vollständig durch Fluor, Chlor oder Brom substituiert sein.

Erfindungsgemäß geeignete Polycarbonate gemäß Komponente 1) sind sowohl Homopolycarbonate als auch Copolycarbonate, wobei die Diphenole der Formel (Ia) nur für die Herstellung von Copolycarbonaten mit den Diphenolen der Formel (I) eingesetzt werden, wobei der Gewichtsanteil an Diphenolen der Formel (Ia) in den Copolycarbonaten jeweils zwischen 1 und 20 Gew.-%, vorzugsweise zwischen 1,5 und 15 Gew.-% und insbesondere zwischen 2 und 10 Gew.-%, bezogen jeweils auf die Gewichtssumme der eingesetzten Diphenole der Formel (I) und (Ia) liegt.

Die Copolycarbonate aus den Diphenolen (Ia) und (I) sind erfindungsgemäß als Polycarbonatkomponente 1) bevorzugt.

Die Diphenole der Formel (I) sind entweder literaturbekannt oder nach literaturbekannten Verfahren herstellbar; Polydiorganosiloxane mit Hydroxy-aryloxy-Endgruppen gemäß Formel (Ia) sind ebenfalls bekannt (siehe beispielsweise US-Patent 3 419 634 in Kombination mit US-PS 3 189 662) beziehungsweise nach literaturbekannten Verfahren herstellbar.

Die Herstellung der erfindungsgemäß geeigneten Polycarbonate gemäß Komponente 1) ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich Polydiorganosiloxanhaltigen Polycarbonaten siehe beispielsweise DE-OS 3 334 782 beziehungsweise EP-A-0 122 535.)

In der einschlägigen Literatur werden ihre verbesserten mechanischen Eigenschaften bei tieferen Temperaturen beschrieben [siehe beispielsweise B. M. Beach, R. P. Kambour und A. R. Schultz, J. Polymer, Sci., Polym. Lett. Ed. 12, 247 (1974)].

Geeignete Kettenabbrecher sind beispielsweise Phenol, p-Chlorphenol, p-tert.-Butylphenol oder 2,4,6-Tribromphenol, aber auch langkettige Alkylphenole wie 4-(1,3-Tetramethyl-butyl)-phenol, gemäß DE-OS 2 842 005 oder Monoalkylphenole oder Dialkylphenole mit insgesamt 8 bis 20 C-Atomen in den Alkylsubstituenten gemäß deutscher Offenlegungsschrift 3 506 472 (Le A 23 654) wie beispielsweise p-Nonylphenyl, 3,5-di-tert.-Butylphenol, p-tert.-Octylphenol, p-Dodecylphenol, 2-(3,5-Dimethylheptyl)-phenol und 4-(3,5-Dimethylheptyl)-phenol.

Die Menge an Kettenabbrechern beträgt vorzugsweise 1 Mol-% bis 10 Mol-%, bezogen jeweils auf die Mole an Diphenolen.

Die erfindungsgemäß geeigneten Polycarbonate gemäß Komponente 1) haben mittlere Gewichtsmittelmolekulargewichte ($\overline{M}_w$, gemessen beispielsweise durch Ultrazentrifugation oder Streulichtmessung) von 10.000 bis 200.000 g/Mol, vorzugsweise von 20.000 bis 80.000 g/Mol.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxyphenyl)-propan, 2,2-Bis-(3,5-dichlor-4-hydroxyphenyl)-propan und 2,2-Bis-(3,5-dibrom-4-hydroxyphenyl )-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Diphenole der Formel (Ia) sind solche, in denen R Methyl, Ethyl, Propyl, n-Butyl, tert.-Butyl, Phenyl, Chlormethyl, Trifluorpropyl, Chlorphenyl und Naphthyl ist. Bevorzugte Diphenole (Ia) sind solche, worin R Methyl ist, wie bereits erwähnt. Besonders bevorzugte Diphenole der Formel (Ia) sind die der Formel (Ib)

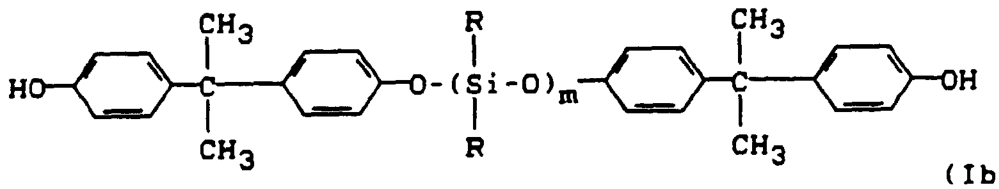

(Ib)

worin die

R's gleich sind und die vorstehend genannte Bedeutung haben, also Methyl etc. und Naphthyl bedeuten und

m wiederum eine ganze Zahl zwischen 5 und 200, vorzugsweise zwischen 10 und 150 und insbesondere zwischen 20 und 80 ist.

Die erfindungsgemäß geeigneten Polycarbonate gemäß Komponente 1) können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen. Derartige Verzweiger sind bekannt (siehe beispielsweise DE-OS 1 570 533, DE-OS 1 595 762 und US-PS 3 544 514).

Beispiele für geeignete Verzweigungsmittel sind 2,4-Bis-(4-hydroxiphenyl-isopropyl)-phenol, 2,6-Bis-(2'-hydroxi-5'-methylbenzol)-4-methylphenol, 2-(4-Hydroxiphenyl)-2-(2,4-dihydroxiphenyl)-propan, 1,4-Bis-(4,4'-dihydroxitriphenyl-methyl)-benzol, 2,4-Dihydroxibenzoesäure, Trimesinsäure, Cyanurchlorid, 3,3-Bis-(4-hydroxiphenyl)-2-oxo-2,3-dihydroindol sowie 3,3-Bis-(4-hydroxi-3-methyl-phenyl)-2-oxo-2,3-dihydroindol.

Bevorzugte Polycarbonate sind dadurch gekennzeichnet, daß das Polycarbonat ein Polydiorganosiloxan-Polycarbonat-Blockcokondensat mit einer relativen Viskosität (gemessen an einer Lösung von 0,5 g Blockcokondensat in 1 dl Dichlormethan bei 25°C) von 1,15 bis 1,38, vorzugsweise von 1,20 bis 1,35 ist und einem Gehalt an Polydiorganosiloxan-Einheiten hat, der sich aus den bereits genannten Mengen an einkondensierten Diphenolen der Formel (Ia) ergibt.

Erfindungsgemäß besonders bevorzugte Polycarbonatkomponenten 1) sind Polydiorganosiloxan-Polycarbonat-Blockcokondensate, die als Diphenole (I) die bereits erwähnten, bevorzugten einkondensiert enthalten, und die als Diphenole der Formel (Ia) diejenigen der Formel (Ib) einkondensiert enthalten.

Die erfindungsgemäß einzusetzende Polycarbonatkomponente 1) kann auch ein Gemisch verschiedener Polycarbonate aus den Diphenolen (1) und gegebenenfalls (Ia) sein, wobei als Mischungskomponente auch ein Copolycarbonat aus (I) und (Ia) eingesetzt werden kann, das mehr als 20 Gew.-% Diphenole (Ia) einkondensiert enthält, sofern in der Gesamtmenge an Polycarbonaten der Komponente 1) der erfindungsgemäße Anteil an einkondensiertem (Ia) wiederum in den bereits genannten Grenzen von 1 Gew.-% bis 20 Gew.-% liegt.

Die Komponente 2)

Die erfindungsgemäß einzusetzenden thermoplastischen Polymerisate sind entweder als solche bereits bekannt oder nach bekannten Verfahren erhältlich (siehe beispielsweise GB-OS 2 076 171 oder DE-AS 2 724 360).

Die $C_{10}$-$C_{40}$-Alkylreste in den Monomeren 2.1) können linear oder verzweigt, ungesättigt oder gesättigt sein, bevorzugt sind lineare, gesättigte $C_{10}$-$C_{40}$-Alkylreste. Geeignete Alkylreste sind beispielsweise Octadecyl, 1-Eicosanyl und 1-Docosanyl.

Bevorzugte Monomere 2.1) sind beispielsweise Stearylacrylat, Behenylacrylat bzw. 1-Docosanylacrylat und Eicosanylacrylat und die entsprechenden Ester der Methacrylsäure wie Stearylmethacrylat, 1-Docosanylmethacrylat und Eicosanylmethacrylat.

Geeignete Monomere 2.2) sind Styrol, α-Methylstyrol, p-Methylstyrol oder p-Chlorstyrol.

Geeignete Monomere 2.3) sind Methacrylsäuremethylester, Methacrylsäureethylester, Methacrylsäurepropylester, Methacrylsäure-iso-propylester, Methacrylsäurebutylester und Methacrylsäure-iso-butylester.

Bevorzugte Monomere 2.2) beziehungsweise 2.3) sind Styrol, p-Methylstyrol und Methacrylsäuremethylester.

Die unvernetzten Polymerisate 2) aus den Monomeren 2.1) und gegebenenfalls 2.2) sowie aus den Monomeren 2.1) und 2.3) sollen Glastemperaturen von mehr als + 2°C, vorzugsweise von mehr als + 10°C haben.

Die Zusammensetzung der Polymerisate 2), enthaltend Monomere 2.1), die unterschiedliche C-Kettenlängen der Alkoholreste besitzen können, und gegebenenfalls Monomere 2.2) bzw. 2.3) muß auf alle Fälle so gewählt werden, daß die Glastemperatur der Polymerisate mehr als +2°C, vorzugsweise mehr als +10°C beträgt.

Die Glastemperaturen der Polymerisate lassen sich beispielsweise durch differentielle Thermoanalyse bestimmen.

Die Herstellung der Komponente 2) kann nach beliebigen Polymerisationsverfahren in Masse, Lösung, Wasser, Suspension, Dispersion und Emulsion radikalisch, thermisch oder ionisch erfolgen. Bevorzugt wird die Komponente 2) in Masse oder in Emulsion hergestellt.

Im Falle der bevorzugten Emulsionspolymerisation wird vorzugsweise so vorgegangen, daß aus einer Lösung der Monomeren 2.1) und gegebenenfalls 2.2) beziehungsweise 2.3), die bis zu 100 Gew.-%, vorzugsweise bis zu 50 Gew.-% und insbesondere bis zu 25 Gew.-%, bezogen auf die Gewichtssumme der zu polymerisierenden Monomeren der Komponente 2), eines inerten organischen Lösungsmittels enthält, und einer wäßrigen Lösung geeigneter Emulgatoren mittels Rührwerken, Emulgiermaschinen, beispielsweise Homogenisatoren, oder mittels Verdüsen eine Voremulsion hergestellt wird.

Entsprechende Emulgieraggregate sind dem Fachmann bekannt. Als Emulgatoren sind anionische, kationische oder nichtionische geeignet wie beispielsweise höhere aliphatische Fettsäuren, organische Sulfonsäuren oder Schwefelsäurehalbester, Alkylammoniumsalze, polyethoxylierte Phenoldervate oder aliphatische polyethoxylierte Polyetherblockpolymere. Das Verhältnis der wäßrigen zur organischen Phase der Voremulsion kann dabei in weiten Grenzen variieren; bevorzugt liegt das Verhältnis der wäßrigen zur organischen Phase zwischen 9/1 und 1/1. Die Voremulsion wird dann mit Hilfe üblicher Radikalinitiatoren unter Anwendung üblicher Bedingungen kontinuierlich, halbkontinuierlich oder batchweise polymerisiert.

Die Einstellung des Molekulargewichts der Komponente 2) kann durch verschiedene Maßnahmen erreicht werden, wie Temperatur, Monomerkonzentration, Startermenge oder durch Einsatz sogenannter Regler, wie Organoschwefel-Verbindungen, beispielsweise Mercaptane und/oder Disulfide, wobei langkettige Mercaptane wie n- oder tert.-Dodecylmercaptane vorteilhaft sind.

Die Regler werden normalerweise im Monomergemisch gelöst und die Mischung danach polymerisiert. Eine derartige Molekulargewichtseinstellung von Vinylpolymeren ist dem Fachmann geläufig.

Stand der Technik

Aus der DE-AS 1 109 884 sind Formmassen aus Polycarbonaten und Polymerisaten von alkenylaromatischen Verbindungen bekannt. Die Formmassen haben eine bessere Verarbeitbarkeit.

Mischungen von Polycarbonaten mit Polymethylmethacrylaten sind ebenfalls bekannt (siehe beispielsweise GB-PS 1 182 807 und JA 72/16063)
(JP-B-5-47/16063).

Mischungen von Polycarbonaten mit vernetzten (Meth)Acrylat-Polymeren sind ebenfalls bekannt (siehe beispielsweise US-PS 4 148 842).

Mischungen von Polycarbonaten mit Acrylkautschuk-Interpolymeren sind ebenfalls bekannt (siehe US-Patent 4 299 928). Hierbei sind thermoplastische Phasen auf Basis von $C_1$-$C_{16}$-(Meth)Acrylaten involviert (Spalte 3, Zeilen 65 ff des US-Patents 4 299 928).

Aus der japanischen Offenlegungsschrift Nr. 18 611/68 sind Polycarbonate mit 2 bis 40 Teilen Polyacrylsäureestern oder mit Copolymeren von Acrylsäureestern mit anderen Vinylmonomeren bekannt. Ziel dieser Mischungen ist die Verbesserung der Schlagzähigkeit und Spannungsrißbeständigkeit der Polycarbonate sowie deren Heißwasserund Temperaturbeständigkeit. Als Acrylsäureester sind auch Polyoctylacrylate genannt.

Als andere Vinylmonomere sind unter anderem Styrol und Methacrylsäureester genannt, die in Mengen von weniger als 50 Mol-% mit den Acrylsäureestern polymerisiert werden können Ziel des Gegenstandes der JA 18 611/68 ist nicht, die Benzinbeständigkeit zu verbessern.

Aus dem US-Patent 3 742 088 sind Mischungen von Polycarbonaten mit Elastomeren bekannt, die eine Glastemperatur von weniger als 0°C haben. Als Elastomere sind auch Copolymere von Butylacrylaten mit Stearylacrylaten und Lauryl($C_{12}$)methacrylatkautschuke involviert Die Menge an Stearylacrylaten in den Copolymeren beträgt 20 Gew.-% (Anspruch 5 des US-Patents 3 742 088).

Das in den Beispielen des US-Patents 3 742 088 eingesetzte Butylacrylat/Stearylacrylat-Copolymer (80/20 Gew-Verhältnis) hat eine Glasübergangstemperatur von - 60°C bis - 70°C (Tabelle I, Beispiel 5), der eingesetzte Laurylmethacrylatkautschuk hat eine Glasübergangstemperatur von - 75°C (Tabelle II). Durch den Zusatz der Elastomeren soll die Kerbschlagzähigkeit der Polycarbonate verbessert werden.

Aus der GB-PS 1 394 481 sind Mischungen von Polycarbonaten mit Acrylsäurecopolymeren bekannt. Die Copolymeren bestehen aus 90 bis 75 Gew.-% von Methylmethacrylat und 10 bis 25 Gew.-% (Meth)Acrylaten von $C_4$-$C_{12}$-Alkoholen. Ziel der Abmischungen ist eine verringerte Schmelzviskosität, verbunden mit verbesserter Verarbeitbarkeit und verbesserter Stabilität gegen Verfärbung.

Eine Verbesserung der Benzinbeständigkeit ist auch in der GB-PS nicht angesprochen.

Aus der DE-OS 2 303 190 sind Mischungen von Polycarbonaten mit Polyacrylat-Elastomeren bekannt; wobei die Acrylsäureester solche sind, die 2 bis 8 C-Atome im Alkylrest haben. Mit den Mischungen der DE-OS 2 303 190 soll eine verringerte Kerbbreiten-Empfindlichkeit erreicht werden.

Aus der DE-OS 3 347 071 sind Mischungen auf Basis von Polysiloxan-Polycarbonat-Blockcopolymeren bekannt, wobei einerseits thermoplastische Copolymerisate zugesetzt werden können [Komponente (c)], die unter anderem aus Styrolen und/oder Methylmethacrylat hergestellt sind (Seite 13, Zeilen 11 ff der DE-OS 3 347 071), und wobei andererseits kautschukelastische Polymerisate mit einer Glasübergangstemperatur von unter - 20°C [Komponente (d)] zugesetzt werden können, die unter anderem Copolymerisate auf Basis von $C_1$-$C_{18}$-Alkylalkohol-(Meth)Acrylsäureestern subsummieren (siehe Seite 21 der DE-OS 3 347 071).

Ziel des Zusatzes der kautschukelastischen Polymerisate ist hohe Wärmeformbeständigkeit, Zäh-Spröd-Übergang bei tieferen Temperaturen und eine gewisse Benzinbeständigkeit, die durch den Zusatz von Polyalkylenterephthalat noch verbessert werden kann.

Aus der EP-A-0 199 824 sind Mischungen von verschiedenen Thermoplasten bekannt, die unter optischen Gesichtspunkten abgemischt werden, um in der Summe keine Doppelbrechung zu erzielen. Als Thermoplastkomponenten können aromatische Polycarbonate einerseits und (Meth)Acrylate von höheren Alkoholen eingesetzt werden, wie Cetyl ($C_{16}$)-methacrylat oder Octadecylacrylat. Hierbei werden die Polycarbonate als positiv "polarisierend" und die (Meth) Acrylate von höheren Alkoholen als negativ"polarisierend" eingestuft (Seite 7, Absatz 3, bis Seite 8, Absatz 1 des EP-A). Konkrete Mischungsverhältnisse der verschieden "polarisierend" wirkenden Thermoplasten werden in Beschreibung und Ansprüchen nicht genannt.

In den Beispielen (Tabelle 1, Seite 17, der EP-A 0 199 824) werden maximal 83,5 Teile Polycarbonat eingesetzt in Kombination mit 21,5 Teilen Styrolharzen (das Blockcopolymer besteht bekanntlich aus 30 % Polystyrol und 70 % Polycarbonat gemäß Beispiel 1 der EP-A 0 199 824). Die Gewichtsverhältnisse liegen also maximal bei 79,5 % Polycarbonat zu 20,5 % Polystyrol, also klar außerhalb der von uns beanspruchten Untergrenze von 85 Gew.-% Polycarbonat 1) zu 15 Gew.-% Polymerisat 2).

Der Gegenstand unserer Erfindung ist somit durch die Lehre der EP-A 0 199 824 nicht vorweggenommen, aber auch nicht nahegelegt, da nicht Ziel der Lehre der EP-A 0 199 824 ist, kraftstoffbeständige und gegebenenfalls tieftemperaturzähe Mischungen auf Basis von Polycarbonat zur Verfügung zu stellen.

Gegenstand der vorliegenden Erfindung ist somit auch die Verwendung der erfindungsgemäßen Mischungen zur Herstellung von benzinbeständigen Formkörpern, also solchen, die mit Kraftstoffen aller Art in Berührung kommen, insbesondere von Autoteilen, Flugzeugteilen, Schiffsteilen, von Dichtungen jeglicher Art, für Benzin- und Ölleitungen, von Pumpwerken etc.

Die erfindungsgemäßen Mischungen können übliche Additive, ausgewählt aus Verarbeitungshilfsmiteln, wie z.B. Fließ- und Entformungsmitteln, Füll- und Verstärkungsmitteln, wie z.B. Talk, Kreide oder Glasfasern, Farbpigmenten, wie z.B. Titandioxid oder Ruß und/oder außerdem Brandschutzmitteln, wie z.B. Halogenverbindungen, Antimonoxid, Sulfonate u.a. enthalten.

Gegenstand der vorliegenden Erfindung sind somit auch Mischungen, enthaltend die Komponenten 1) und 2) sowie zusätzlich ein Additiv, ausgewählt aus Verarbeitungshilfsmitteln, Füllmitteln, Verstärkungsmitteln, Farbpigmenten und Brandschutzmitteln.

Die Herstellung der erfindungsgemäßen Mischungen aus den Komponenten geschieht vorzugsweise in Extrudern. Es sind jedoch auch Kneter, Walzen oder Rührgefäße zur Herstellung geeignet.

Zur Herstellung der erfindungsgemäßen Mischungen kann es angezeigt sein, zunächst ein Konzentrat aus den Komponenten 1) und 2) herzustellen, und dieses mit einer größeren Menge 1) auf den gewünschten Gehalt an 2) zu verdünnen. Die Herstellung der Konzentrate kann in den vorgenannten Mischaggregaten bei Temperaturen zwischen 50°C und 320°C, vorzugsweise 150°C und 320°C erfolgen.

Darüber hinaus ist die Herstellung der Mischungen auch durch gemeinsame Ausdampfextrusion der Mischungskomponenten aus einem Gemisch der jeweiligen Lösungen in aliphatischen und aromatischen Halogenkohlenwasserstoffen, wie Dichlormethan und Monochlorbenzol, über geeignete Extruder mit einer Vorrichtung zur Voreindampfung möglich.

Gegenstand der vorliegenden Erfindung ist somit auch ein Verfahren zur Herstellung der erfindungsgemäßen Mischungen, enthaltend die Komponenten 1) und 2) und gegebenenfalls ein Additiv, ausgewählt aus Verarbeitungsmitteln, Füllmitteln, Verstärkungsmitteln, Farbpigmenten und/oder Brandschutzmitteln, das dadurch gekennzeichnet ist, daß man die Komponenten 1) und 2) sowie gegebenenfalls mindestens eines der genannten additive simultan oder sukzessive entweder in der Schmelze oder in Lösung in bekannter Weise vermischt und danach in üblicher Weise isoliert.

Die Formmassen der vorliegenden Erfindung können zur Herstellung von Formkörpern jeder Art nach bekannten Verfahren verwendet werden. Insbesondere können Formkörper durch Extrusion oder Spritzguß auf den hierfür üblichen Aggregaten hergestellt werden.

Beispiele für herstellbare Formkörper sind, außer den bereits genannten, Karosserieteile und Gehäuseteile beispielsweise für elektrische Geräte, Apparaturen wie Haushaltsgeräte und Platten und Folien für den Bausektor und Elektrosektor.

Beispiele

Interpolymerisate A:

$A_1$:

Eine Mischung aus 322 g Stearylmethacrylat, 1078 g Styrol und 3 g tert.-Dodecylmercaptan wird mit Hilfe eines Hochgeschwindigkeitsrührers in einer Lösung aus 25 g Natriumsalz von $C_{14}$-$C_{18}$-Alkylsulfonsäuren in 2.810 g Wasser emulgiert.

Ein Fünftel dieser Emulsion wird unter Rühren und unter einem leichten Stickstoffstrom auf 75°C erhitzt und mit einer Lösung aus 6 g Kaliumperoxodisulfat in 140 g Wasser versetzt. Innerhalb zwei Stunden werden die restliche Emulsion und eine Lösung aus 12 g Natriumsalz von $C_{14}$-$C_{18}$-Alkylsulfonsäuren in 400 g Wasser gleichmäßig bei 75°C zudosiert. Anschließend wird vier Stunden bei 75°C auspolymerisiert. Es wird ein Latex mit einem Feststoffgehalt von 29 Gew.-% erhalten.

Das Polymerisat wird nach Zusatz von 12 g phenolischem Antioxidans mit wäßriger Magnesiumsulfatlösung koaguliert, gewaschen und getrocknet. Man erhält 1.380 g Polymerpulver mit einem L-Wert von 55.

$$(\text{L-Wert} = (\eta_{rel}-1)/0,005;$$

mit $\eta_{rel}$ = relative Lösungsviskosität, gemessen in Dimethylformamid bei 25°C und einer Konzentration von 0,005 g/cm$^3$)

Vergleichspolymerisat $A_2$:

Zur Herstellung des Vergleichspolymerisates $A_2$ werden die folgenden Monomermischungen für die Emulsionsherstellung und anschließende Polymerisation analog der Herstellung von $A_1$ eingesetzt:

$A_2$: 1.400 g Styrol
3 g tert. Dodecylmercaptan

Polycarbonattypen:

1. Polycarbonat auf Basis von Bisphenol A mit einer relativen Lösungsviskosität von 1,28.

2. Copolycarbonat auf Basis von Bisphenol A und 5 Gew.-% Polydimethylsiloxan der mittleren Blocklänge ($P_n$) 80 mit einer relativen Lösungsviskosität von 1,29, hergestellt unter Verwendung von Phenol als Kettenabbrecher gemäß DE-OS 3 334 782.

Prüfkörperherstellung und Prüfung:

Die Herstellung der Prüfkörper erfolgte bei 310°C Massetemperatur auf einem Spritzgießaggregat.

Zur Bestimmung der Benzinbeständigkeit wurden Prüfkörper mit den Maßen 80 mm x 10 mm x 4 mm hergestellt, die auf Biegeschablonen verschiedener Krümmungsradien so eingespannt wurden, daß Randfaserdehnungen $\varepsilon_R$ von 0,4 % bzw. 1,0 % resultieren. Die Schablonen wurden mit aufgebrachter Probe 15 Minuten bei 70°C in einem Wärmeschrank (mit Luftdurchwirbelung nach DIN 50 011, 2, 3) gelagert.

Die Schablonen mit den Proben wurden aus dem Schrank entnommen und unmittelbar danach ein Prüfkraftstoffgetränkter Wattebausch aufgelegt. Als Prüfkraftstoff wurde ein Testbenzin nach DIN 51 604 verwendet, das sich aus 50 Vol.-% Toluol, 30 Vol.-% Isooctan, 15 Vol.-% Diisobutylen und 5 Vol-% Ethanol zusammensetzt. Nach 15 Minuten Einwirkungsdauer wurde der Wattebausch entfernt und weitere 15 Minuten abgewartet, um die Probe ablüften zu lassen.

Anschließend wurden die Prüfkörper mit dem bloßen Auge wie folgt bewertet:

| Stufe | Merkmal |
|---|---|
| 1 | keine sichtbare Veränderung |
| 2 | Oberfläche vermattet |
| 3 | feine Risse |
| 4 | starke Risse, Bruch |

Die Zusammensetzung der untersuchten Formmassen sowie die Prüfergebnisse sind in den folgenden Tabellen zusammengefaßt:

Tabelle 1

| | Gew.-% | |
|---|---|---|
| Beispiel | 1a)* | 1b)* |
| Polycarbonat | 100 | - |
| Siloxancopolycarbonat | - | 100 |
| Benzintest | | |
| Randfaserdehnung | Bewertung | |
| $\varepsilon_R$ = 0,4 % | 3 | 3 |
| $\varepsilon_R$ = 1,0 % | 4 | 4 |

* nicht erfindungsgemäß

Tabelle 2

| | Gew.-% | | | |
|---|---|---|---|---|
| Beispiel | 2a) | 2b) | 2c)* | 2d)* |
| Polycarbonat | 94 | - | 94 | - |
| Siloxancopolycarbonat | - | 94 | - | 94 |
| Komponente $A_1$ | 6 | 6 | - | - |
| Komponente $A_2$ | - | - | 6 | 6 |
| Benzintest | | | | |
| Randfaserdehnung | Bewertung | | | |
| $\varepsilon_R$ = 0,4 % | 2 | 2 | 3 | 3 |
| $\varepsilon_R$ = 1,0 % | 2 | 2 | 4 | 4 |

* nicht erfindungsgemäß

## Patentansprüche

**1.** Mischungen, bestehend aus

1) 85 Gew.-% bis 99,9 Gew.-% an thermoplastischen Polycarbonaten,

2) 15 Gew.-% bis 0,1 Gew.-% an unvernetzten, thermoplastischen Polymerisaten mit mittleren Gewichtsmittelmolekulargewichten $\overline{M}_w$ von 2.000 bis 500.000, dadurch gekennzeichnet, daß die Polymerisate (2) aus

2.1) (Meth)Acrylsäure-$C_{10}$-$C_{40}$-Alkylestern in bekannter Weise hergestellt sind, wobei
2.2) bis zu 90 Gew.-% der Komponente 2.1) durch Styrole ersetzt sein können, oder wobei
2.3) bis zu 60 Gew.-% der Komponente 2.1) durch Methacrylsäure-$C_1$-$C_4$-Alkylester ersetzt sein können und wobei die Polymerisate 2) eine Glastemperatur von über + 2°C haben müssen, und amorph sind.

2. Mischungen gemäß Anspruch 1, enthaltend zusätzlich ein Additiv, ausgewählt aus Verarbeitungshilfsmitteln, Füllmitteln, Verstärkungsmitteln, Farbpigmenten und Brandschutzmitteln.

3. Verfahren zur Herstellung der Mischungen der Ansprüche 1 und 2, dadurch gekennzeichnet, daß man die Komponenten 1) und 2) sowie gegebenenfalls mindestens eines der genannten Additive simultan oder sukzessive entweder in der Schmelze oder in Lösung in bekannter Weise vermischt und danach in üblicher Weise isoliert.

4. Verwendung der Mischungen der Ansprüche 1 und 2 zur Herstellung von benzinbeständigen Formkörpern.

## Claims

1. Blends consisting of

1) 85 wt.% to 99.9 wt.% of thermoplastic polycarbonates,

2) 15 wt.% to 0.1 wt.% of uncrosslinked, thermoplastic polymers having weight average molecular weights $\overline{M}_w$ of 2000 to 500000, characterised in that the polymers (2) are produced from

2.1) (meth)acrylic acid $C_{10}$-$C_{40}$ alkyl esters in a known manner, wherein
2.2) up to 90 wt.% of component 2.1) may be replaced with styrenes or wherein
2.3) up to 60 wt.% of component 2.1) may be replaced with methacrylic acid $C_1$-$C_4$ alkyl esters and wherein the polymers 2) must have a glass transition temperature of above +2°C and are amorphous.

2. Blends according to claim 1 additionally containing an additive selected from among processing auxiliaries, fillers, reinforcing materials, colouring pigments and flame retardants.

3. Process for the production of the blends of claims 1 and 2, characterised in that components 1) and 2), optionally together with at least one of the stated additives are mixed together simultaneously or in succession either as a melt or in solution in a known manner and the blend is then isolated in the conventional manner.

4. Use of the blends of claims 1 and 2 for the production of petrol-resistant mouldings.

## Revendications

1. Mélanges consistant en

1) 85% en poids à 99,9% en poids de polycarbonates thermoplastiques,
2) 15% en poids à 0,1% en poids de polymères thermoplastiques non réticulés à des poids moléculaires moyens, moyenne en poids, $\overline{M}_w$ de 2 000 à 500 000, caractérisés en ce que les polymères (2) sont préparés de manière connue, à partir de

2.1) des (méth)acrylates d'alkyle en $C_{10}$-$C_{40}$,
2.2) jusqu'à 90% en poids du composant 2.1) pouvant être remplacés par du styrène, ou bien
2.3) jusqu'à 60% en poids du composant 2.1) pouvant être remplacés par des méthacrylates d'alkyle en $C_1$-$C_4$, et les polymères 2) devant avoir une température de transition du second ordre supérieure à +2°C et être amorphes.

2. Mélanges selon la revendication 1, contenant en outre un additif choisi parmi les produits auxiliaires de façonnage, les matières de charge, les matières renforçantes, les pigments colorés et les agents ignifugeants.

3. Procédé de préparation des mélanges des revendications 1 et 2, caractérisé en ce que l'on mélange de manière connue les composants 1) et 2) et le cas échéant au moins un des additifs mentionnés, simultanément ou successivement, à l'état fondu ou en solution, puis on isole le mélange de la manière habituelle.

4. Utilisation des mélanges des revendications 1 et 2, pour la fabrication d'objets moulés résistant à l'essence minérale.